# EUROPEAN PATENT APPLICATION

(11) **EP 4 420 924 A1**
(43) Date of publication of application: **28.08.2024**
(21) Application number: 22897154.5
(22) Date of filing: 01.07.2022
(51) Int. Cl.: B60L 53/62

(54) **CHARGING METHOD AND CHARGING APPARATUS OF CHARGING STATION, AND ELECTRONIC DEVICE**

(30) Priority: 29.11.2021 CN 202111430164
(71) Applicant: Huawei Digital Power Technologies Co., Ltd., Shenzhen, 518043 (CN)
(72) Inventor: LYU, Xin, Shenzhen, 518043 (CN); LIN, Quanxi, Shenzhen, 518043 (CN); HU, Wenjing, Shenzhen, 518043 (CN); LIAO, Mengxiong, Shenzhen, 518043 (CN)
(74) Representative: Gill Jennings & Every LLP
(86) International application number: PCT/CN2022/103460
(87) International publication number: WO 2023/093058

(57) **Abstract**

This application provides a charging method and charging apparatus for a charging station, and an electronic device, so that power time division multiplexing charging of the charging station is implemented in a charging area division manner and a time period division manner, to improve time utilization of the charging station, and further improve comprehensive time utilization of the charging station. In this application, a calendar day may be divided into a plurality of time periods. When a terminal that newly enters prepares to be charged in a first charging area in a plurality of charging areas in a first time period in a plurality of time periods and the charging station does not have an allocable power in the first time period, a charging power of each terminal in the charging station may be reallocated based on an actually used power of the first charging area in the first time period and a preset power allocation ratio of the plurality of charging areas.

## Description

This application claims priority to Chinese Patent Application No. 202111430164.4, filed with the China National Intellectual Property Administration on November 29, 2021 and entitled "CHARGING METHOD AND CHARGING APPARATUS FOR CHARGING STATION, AND ELECTRONIC DEVICE", which is incorporated herein by reference in its entirety.

### TECHNICAL FIELD

This application relates to the field of energy technologies, and more specifically, to a charging method and charging apparatus for a charging station, and an electronic device in the field of energy technologies.

### BACKGROUND

Currently, with rapid development of electric vehicle technologies, a quantity of charging stations for charging an electric vehicle (that is, terminals) gradually increases. Comprehensive utilization of the charging station is one of main indexes for measuring the charging station. The comprehensive utilization is usually determined by power utilization and time utilization of the charging station (total duration of charging the electric vehicle in the charging station within 24 hours/24 hours).

In scenarios such as a residential area and an industrial park, use time of the charging station is centralized, and a user does not move a completely charged electric vehicle in a timely manner. In this case, actual parking duration of the electric vehicle is greater than actual charging duration, and time utilization is low. Consequently, comprehensive utilization is low.

Therefore, an urgent technical solution that can improve comprehensive utilization of a charging station is required.

### SUMMARY

This application provides a charging method and charging apparatus for a charging station, and an electronic device, so that power time division multiplexing charging of the charging station is implemented in a charging area division manner and a time period division manner, to improve time utilization of the charging station, and further improve comprehensive time utilization of the charging station.

According to a first aspect, this application provides a charging method for a charging station. The charging station may include a plurality of charging areas, and the charging method may include: dividing a calendar day into a plurality of time periods; and when an electric vehicle that newly enters prepares to be charged in a first charging area in the plurality of charging areas (that is, the plurality of charging areas include the first charging area) in a first time period in the plurality of time periods and the charging station does not have an allocable power in the first time period, reallocating a charging power of each electric vehicle in the charging station based on an actually used power of the first charging area in the first time period and a preset power allocation ratio of the plurality of charging areas.

In addition to the plurality of charging areas, the charging station may further include a rectifier module and a charging apparatus.

The rectifier module is connected to an alternating current power supply, and the rectifier module may convert an alternating current transmitted by the alternating current power supply into a direct current. The charging apparatus may communicate with the rectifier module and each of the plurality of charging areas, and is configured to control the rectifier module and the plurality of charging areas. Each charging area is connected to the rectifier module by using a direct current bus. In addition, each charging area includes a plurality of charging piles (that is, a plurality of DC/DC converters), and each charging pile in each charging area may charge the electric vehicle by using a charger of the charging pile.

Optionally, the allocable power may indicate an available power in an output power of the charging station other than a power that meets a charging requirement of one or more electric vehicles that are being charged in the charging station. The charging requirement may indicate an expected charging capacity (for example, a state of charge is 90% or 95%) that needs to be reached, within expected parking duration (determined by a parking start time point of the electric vehicle in a charging area in which the electric vehicle is located and a time point at which the electric vehicle is expected to leave the charging area in which the electric vehicle is located, for example, 9h), by the one or more electric vehicles that are being charged in the charging station.

In this application, time division multiplexing charging of the output power of the charging station is implemented by using a combination of a charging area division manner and a time period division manner, to improve time utilization of the charging station, and further improve comprehensive time utilization of the charging station.

In a possible implementation, in addition to the first charging area, the plurality of charging areas may include a second charging area. A charging mode or a charging rate of the first charging area is different from a charging mode or a charging rate of the second charging area.

Further, the charging mode of the first charging area is a slow charging mode. The slow charging mode may indicate that a first electric vehicle can be charged to the expected charging capacity in the first charging area within preset first charging duration, and the first electric vehicle may include an electric vehicle that newly enters the first charging area and/or an electric vehicle that is being charged in the first charging area.

The charging mode of the second charging area may be a fast charging mode. The fast charging mode may indicate that a second electric vehicle can be charged to the expected charging capacity in the second charging area within preset second charging duration, and the second electric vehicle may include an electric vehicle that newly enters the second charging area and/or an electric vehicle that is being charged in the second charging area.

Optionally, the first charging duration may be greater than the second charging duration. In other words, charging duration required for charging an electric vehicle to the expected charging capacity in the first charging area is longer than charging duration required for charging the same electric vehicle to the expected charging capacity in the second charging area.

For example, the charging rate of the first charging area may determine a charging time period for charging an electric vehicle in the first charging area to a regional charging capacity. Similarly, the charging rate of the second charging area may determine a charging time period for charging an electric vehicle in the second charging area to a regional charging capacity.

Optionally, the charging rate of the first charging area may be less than the charging rate of the second charging area. In other words, charging duration used when the first charging area is selected to charge an electric vehicle to the expected charging capacity is greater than charging duration used when the second charging area is selected to charge the same electric vehicle to the expected charging capacity.

In a possible implementation, for the first charging area, when the electric vehicle that newly enters prepares to be charged in the first charging area in the first time period in the plurality of time periods and the charging station does not have an allocable power in the first time period, the charging power of each electric vehicle in the charging station may be reallocated based on the actually used power of the first charging area in the first time period and the preset power allocation ratio of the plurality of charging areas. There may be the following two cases:

Case 1: When the electric vehicle that newly enters the first charging area prepares to be charged in the first charging area in the first time period and the charging station cannot meet, in the first time period, a charging requirement of the electric vehicle that newly enters the first charging area, if the actually used power of the first charging area in the first time period is greater than or equal to a power allocated to the first charging area based on a preset power allocation ratio of the first charging area in the first time period,
a charging power of each charger in the first charging area in the first time period may be reduced based on a charging requirement, in the first time period, of the electric vehicle that newly enters the first charging area, and the electric vehicle that newly enters the first charging area and the electric vehicle that is being charged in the first charging area may be charged based on the reduced charging power of the charger in the first time period.

Case 2: When the electric vehicle that newly enters the first charging area prepares to be charged in the first charging area in the first time period and the charging station cannot meet, in the first time period, a charging requirement of the electric vehicle that newly enters the first charging area, if the actually used power of the first charging area in the first time period is less than a power allocated to the first charging area based on a preset power allocation ratio of the first charging area in the first time period,
an actually used power of each charger in the second charging area in the first time period may be reduced based on a charging requirement, in the first time period, of the electric vehicle that newly enters the first charging area, to increase the actually used power of the first charging area in the first time period; and
the electric vehicle that newly enters the first charging area and the electric vehicle that is being charged in the first charging area are charged based on the increased actually used power of the first charging area in the first time period, and the electric vehicle that is being charged in the second charging area is charged based on the reduced actually used power of the charger in the second charging area in the first time period.

In another possible implementation, for the second charging area, when the electric vehicle that newly enters the second charging area prepares to be charged in the second charging area in the first time period and the charging station does not have an allocable power in the first time period, the charging power of each electric vehicle in the charging station may be reallocated based on an actually used power of the second charging area in the first time period and the preset power allocation ratio of the plurality of charging areas. Similarly, there may also be the following two cases:

Case 1: When the electric vehicle that newly enters the second charging area prepares to be charged in the second charging area in the first time period and the charging station cannot meet, in the first time period, a charging requirement of the electric vehicle that newly enters the second charging area, if the actually used power of the second charging area in the first time period is greater than or equal to a power allocated to the second charging area based on a preset power allocation ratio of the second charging area in the first time period,
a charging power of each charger in the second charging area in the first time period is reduced based on a charging requirement, in the first time period, of the electric vehicle that newly enters the second charging area, and the electric vehicle that newly enters the second charging area and the electric vehicle that is being charged in the second charging area are charged based on the reduced charging power of the charger in the first time period.

Case 2: When the electric vehicle that newly enters the second charging area prepares to be charged in the second charging area in the first time period and the charging station cannot meet, in the first time period, a charging requirement of the electric vehicle that newly enters the second charging area, if the actually used power of the second charging area in the first time period is less than a power allocated to the second charging area based on a preset power allocation ratio of the second charging area in the first time period,
an actually used power of each charger in the first charging area in the first time period is reduced based on a charging requirement, in the first time period, of the electric vehicle that newly enters the second charging area, to increase the actually used power of the second charging area in the first time period; and
the electric vehicle that newly enters the second charging area and the electric vehicle that is being charged in the second charging area are charged based on the increased actually used power of the second charging area in the first time period, and the electric vehicle that is being charged in the first charging area is charged based on the reduced actually used power of the charger in the first charging area in the first time period.

In a possible implementation, the charging method for a charging station may further include: in the first time period, when the charging station has an allocable power, the first electric vehicle and the second electric vehicle may be charged based on a charging mode of each charging area and a preset charging policy corresponding to the charging mode.

It should be noted that the charging policy is related to the charging mode. To be specific, for the first charging area, because the charging mode of the first charging area is the slow charging mode, when the charging station has an allocable power, the first electric vehicle needs to be charged based on a charging policy corresponding to the slow charging mode. Similarly, for the second charging area, because the charging mode of the second charging area is the fast charging mode, when the charging station has an allocable power, the second electric vehicle needs to be charged based on a charging policy corresponding to the fast charging mode.

For example, that the charging station has an allocable power includes two aspects: the charging station has an idle power; and the electric vehicle that newly enters the second charging area prepares to be charged in the second charging area in the first time period and the charging station does not have an idle power.

The idle power may indicate an unused power in the output power of the charging station other than a power that meets a charging requirement of the first electric vehicle and the second electric vehicle, and the idle power is a part of the allocable power.

Therefore, in an example, in the first time period, when the charging station has an idle power, the first electric vehicle and the second electric vehicle may be charged based on the idle power of the charging station and a charging policy corresponding to a charging mode of a charging area in which the first electric vehicle and the second electric vehicle each are located.

In another example, in the first time period, when the electric vehicle that newly enters the second charging area prepares to be charged in the second charging area in the first time period and the charging station does not have an idle power, in a condition that expected charging duration of the first electric vehicle in the first charging area is less than expected parking duration of the first electric vehicle in the first charging area, charging of the first electric vehicle stops based on maximum allowed pause duration of the first electric vehicle, the electric vehicle that newly enters the second charging area starts to be charged, and then the first electric vehicle continues to be charged. Herein, a charging process of the first electric vehicle may be referred to as resumable charging.

The maximum allowed pause duration of the first electric vehicle may be obtained based on the expected parking duration of the first electric vehicle in the first charging area and the expected charging duration of the first electric vehicle in the first charging area.

Optionally, the foregoing resumable charging may be implemented in the following two manners:
Manner 1: Within the maximum allowed pause duration of the first electric vehicle, charging of the first electric vehicle stops, and the second electric vehicle is charged; and the second electric vehicle has reached the expected charging capacity of the second electric vehicle (for example, 95% or 100%, that is, the second electric vehicle completes charging) within the maximum allowed pause duration of the first electric vehicle. The first electric vehicle may immediately continue to be charged at a moment at which the second electric vehicle completes charging, until the first electric vehicle is charged to the expected charging capacity (for example, 90%, that is, the first electric vehicle completes charging).
Manner 2: Within the maximum allowed pause duration of the first electric vehicle, charging of the first electric vehicle stops, and the second electric vehicle is charged. However, if the second electric vehicle does not reach the expected charging capacity of the second electric vehicle (for example, 95% or 100%, that is, the second electric vehicle has not completed charging) within the maximum allowed pause duration of the first electric vehicle, charging of the second electric vehicle also needs to stop, and the first electric vehicle continues to be charged, until the first electric vehicle is charged to the expected charging capacity (for example, 90%, that is, the first electric vehicle completes charging).

It can be understood that a power (which may be referred to as a scheduled power) used to charge the second electric vehicle in a process of stopping charging of the first electric vehicle is also a part of the allocable power. In other words, the allocable power may include two parts: the idle power (an unused power in the allocable power) and the scheduled power (a used and allocable power in the allocable power).

In this application, in a condition that the charging station does not have an idle power, resumable charging is performed on the first electric vehicle in the first charging area in the slow charging mode, to not only implement charging of the second electric vehicle, but also ensure that the first electric vehicle completes charging before a time point at which the first electric vehicle is expected to leave the first charging area (that is, a charging process of the first electric vehicle is not affected), so as to implement power time division multiplexing of the charging station.

Optionally, a preset power allocation ratio of the first charging area and a preset power allocation ratio of the second charging area each may fall within [0, 1].

Optionally, a sum of a preset power allocation ratio of the first charging area and a preset power allocation ratio of the second charging area may be 1.

In conclusion, in the charging method for a charging station provided in this application, the electric vehicle can be charged in a charging area division manner and a time period division manner and with reference to the charging policy corresponding to the charging mode of the charging area. In addition, in this application, different electric vehicles located in different charging areas may be further charged through resumable charging, to improve time utilization of the charging station, and improve comprehensive utilization of the charging station.

According to a second aspect, this application provides a charging apparatus for a charging station. The charging station may include a plurality of charging areas, and the charging apparatus may include a division module and a charging module.

The division module may be configured to divide a calendar day into a plurality of time periods.

The charging module may be configured to: when an electric vehicle that newly enters prepares to be charged in a first charging area in the plurality of charging areas (that is, the plurality of charging areas include the first charging area) in a first time period in the plurality of time periods and the charging station does not have an allocable power in the first time period, reallocate a charging power of each electric vehicle in the charging station based on an actually used power of the first charging area in the first time period and a preset power allocation ratio of the plurality of charging areas.

In addition to the plurality of charging areas, the charging station may further include a rectifier module and a charging apparatus.

The rectifier module is connected to an alternating current power supply, and the rectifier module may convert an alternating current transmitted by the alternating current power supply into a direct current. The charging apparatus may communicate with the rectifier module and each of the plurality of charging areas, and is configured to control the rectifier module and the plurality of charging areas. Each charging area is connected to the rectifier module by using a direct current bus. In addition, each charging area includes a plurality of charging piles (that is, a plurality of DC/DC converters), and each charging pile in each charging area may charge the electric vehicle by using a charger of the charging pile.

Optionally, the allocable power may indicate an available power in an output power of the charging station other than a power that meets a charging requirement of one or more electric vehicles that are being charged in the charging station. The charging requirement may indicate an expected charging capacity (for example, a state of charge is 90% or 95%) that needs to be reached, within expected parking duration (determined by a parking start time point of the electric vehicle in a charging area in which the electric vehicle is located and a time point at which the electric vehicle is expected to leave the charging area in which the electric vehicle is located, for example, 9h), by the one or more electric vehicles that are being charged in the charging station.

In this application, time division multiplexing charging of the output power of the charging station is implemented by using a combination of a charging area division manner and a time period division manner, to improve time utilization of the charging station, and further improve comprehensive time utilization of the charging station.

In a possible implementation, the plurality of charging areas may include a first charging area and a second charging area. A charging mode or a charging rate of the first charging area is different from a charging mode or a charging rate of the second charging area.

Further, the charging mode of the first charging area is a slow charging mode. The slow charging mode may indicate that a first electric vehicle can be charged to the expected charging capacity in the first charging area within preset first charging duration, and the first electric vehicle may include an electric vehicle that newly enters the first charging area and/or an electric vehicle that is being charged in the first charging area.

The charging mode of the second charging area may be a fast charging mode. The fast charging mode may indicate that a second electric vehicle can be charged to the expected charging capacity in the second charging area within preset second charging duration, and the second electric vehicle may include an electric vehicle that newly enters the second charging area and/or an electric vehicle that is being charged in the second charging area.

Optionally, the first charging duration may be greater than the second charging duration. In other words, charging duration required for charging an electric vehicle to the expected charging capacity in the first charging area is longer than charging duration required for charging the same electric vehicle to the expected charging capacity in the second charging area.

For example, the charging rate of the first charging area may determine a charging time period for charging an electric vehicle in the first charging area to a regional charging capacity. Similarly, the charging rate of the second charging area may determine a charging time period for charging an electric vehicle in the second charging area to a regional charging capacity.

Optionally, the charging rate of the first charging area may be less than the charging rate of the second charging area. In other words, charging duration used when the first charging area is selected to charge an electric vehicle to the expected charging capacity is greater than charging duration used when the second charging area is selected to charge the same electric vehicle to the expected charging capacity.

In a possible implementation, for the first charging area, the charging module may be configured to:
when the electric vehicle that newly enters the first charging area prepares to be charged in the first charging area in the first time period and the charging station cannot meet, in the first time period, a charging requirement of the electric vehicle that newly enters the first charging area, if the actually used power of the first charging area in the first time period is greater than or equal to a power allocated to the first charging area based on a preset power allocation ratio of the first charging area in the first time period,
reduce a charging power of each charger in the first charging area in the first time period based on a charging requirement, in the first time period, of the electric vehicle that newly enters the first charging area, and charge, based on the reduced charging power of the charger in the first time period, the electric vehicle that newly enters the first charging area and the electric vehicle that is being charged in the first charging area.

In another possible implementation, for the first charging area, the charging module may be configured to:
when the electric vehicle that newly enters the first charging area prepares to be charged in the first charging area in the first time period and the charging station cannot meet, in the first time period, a charging requirement of the electric vehicle that newly enters the first charging area, if the actually used power of the first charging area in the first time period is less than a power allocated to the first charging area based on a preset power allocation ratio of the first charging area in the first time period,
reduce an actually used power of each charger in the second charging area in the first time period based on a charging requirement, in the first time period, of the electric vehicle that newly enters the first charging area, to increase the actually used power of the first charging area in the first time period; and
charge, based on the increased actually used power of the first charging area in the first time period, the electric vehicle that newly enters the first charging area and the electric vehicle that is being charged in the first charging area, and charge, based on the reduced actually used power of the charger in the second charging area in the first time period, the electric vehicle that is being charged in the second charging area.

In a possible implementation, for the second charging area, the charging module may be configured to:
when the electric vehicle that newly enters the first charging area prepares to be charged in the first charging area in the first time period and the charging station cannot meet, in the first time period, a charging requirement of the electric vehicle that newly enters the first charging area, if the actually used power of the first charging area in the first time period is less than a power allocated to the first charging area based on a preset power allocation ratio of the first charging area in the first time period,
reduce an actually used power of each charger in the second charging area in the first time period based on a charging requirement, in the first time period, of the electric vehicle that newly enters the first charging area, to increase the actually used power of the first charging area in the first time period; and
charge, based on the increased actually used power of the first charging area in the first time period, the electric vehicle that newly enters the first charging area and the electric vehicle that is being charged in the first charging area, and charge, based on the reduced actually used power of the charger in the second charging area in the first time period, the electric vehicle that is being charged in the second charging area.

In another possible implementation, for the second charging area, the charging module may be configured to:
when the electric vehicle that newly enters the second charging area prepares to be charged in the second charging area in the first time period and the charging station cannot meet, in the first time period, a charging requirement of the electric vehicle that newly enters the second charging area, if the actually used power of the second charging area in the first time period is less than a power allocated to the second charging area based on a preset power allocation ratio of the second charging area in the first time period,
reduce an actually used power of each charger in the first charging area in the first time period based on a charging requirement, in the first time period, of the electric vehicle that newly enters the second charging area, to increase the actually used power of the second charging area in the first time period; and
charge, based on the increased actually used power of the second charging area in the first time period, the electric vehicle that newly enters the second charging area and the electric vehicle that is being charged in the second charging area, and charge, based on the reduced actually used power of the charger in the first charging area in the first time period, the electric vehicle that is being charged in the first charging area.

Optionally, the charging module may be further configured to: in the first time period, when the charging station has an allocable power, charge the first electric vehicle and the second electric vehicle based on a charging mode of each charging area and a preset charging policy corresponding to the charging mode.

It should be noted that the charging policy is related to the charging mode. To be specific, for the first charging area, because the charging mode of the first charging area is the slow charging mode, when the charging station has an allocable power, the first electric vehicle needs to be charged based on a charging policy corresponding to the slow charging mode. Similarly, for the second charging area, because the charging mode of the second charging area is the fast charging mode, when the charging station has an allocable power, the second electric vehicle needs to be charged based on a charging policy corresponding to the fast charging mode.

For example, that the charging station has an allocable power includes two aspects: the charging station has an idle power; and the electric vehicle that newly enters the second charging area prepares to be charged in the second charging area in the first time period and the charging station does not have an idle power.

Therefore, in an example, in the first time period, when the charging station has an idle power, the charging module may charge the first electric vehicle and the second electric vehicle based on the idle power of the charging station and a charging policy corresponding to a charging mode of a charging area in which the first electric vehicle and the second electric vehicle each are located.

The idle power may indicate an unused power in the output power of the charging station other than a power that meets a charging requirement of the first electric vehicle and the second electric vehicle, and the idle power is a part of the allocable power.

In another example, in the first time period, when the electric vehicle that newly enters the second charging area prepares to be charged in the second charging area in the first time period and the charging station does not have an idle power, in a condition that expected charging duration of the first electric vehicle in the first charging area is less than expected parking duration of the first electric vehicle in the first charging area, the charging module may stop charging of the first electric vehicle based on maximum allowed pause duration of the first electric vehicle, start to charge the electric vehicle that newly enters the second charging area, and then continue to charge the first electric vehicle. Herein, a charging process of the first electric vehicle may be referred to as resumable charging.

The maximum allowed pause duration of the first electric vehicle may be obtained based on the expected parking duration of the first electric vehicle in the first charging area and the expected charging duration of the first electric vehicle in the first charging area.

Optionally, the charging module may implement resumable charging of the first electric vehicle in the following two manners:
Manner 1: Within the maximum allowed pause duration of the first electric vehicle, the charging module may control to stop charging of the first electric vehicle, and control to charge the second electric vehicle; and the second electric vehicle has reached the expected charging capacity of the second electric vehicle (for example, 95% or 100%, that is, the second electric vehicle completes charging) within the maximum allowed pause duration of the first electric vehicle. The charging module may immediately control to continue to charge the first electric vehicle at a moment at which the second electric vehicle completes charging, until the first electric vehicle is charged to the expected charging capacity (for example, 90%, that is, the first electric vehicle completes charging).
Manner 2: Within the maximum allowed pause duration of the first electric vehicle, the charging module may control to stop charging of the first electric vehicle, and control to charge the second electric vehicle. However, if the second electric vehicle does not reach the expected charging capacity of the second electric vehicle (for example, 95% or 100%, that is, the second electric vehicle has not completed charging) within the maximum allowed pause duration of the first electric vehicle, the charging module also needs to control to stop charging of the second electric vehicle, and control to continue to charge the first electric vehicle, until the first electric vehicle is charged to the expected charging capacity (for example, 90%, that is, the first electric vehicle completes charging).

It can be understood that a power (which may be referred to as a scheduled power) used to charge the second electric vehicle in a process in which the charging module stops charging of the first electric vehicle is also a part of the allocable power. In other words, the allocable power may include two parts: the idle power (an unused power in the allocable power) and the scheduled power (a used and allocable power in the allocable power).

In this application, in a condition that the charging station does not have an idle power, resumable charging is performed on the first electric vehicle by the charging module in the first charging area in the slow charging mode, to not only implement charging of the second electric vehicle, but also ensure that the first electric vehicle completes charging before a time point at which the first electric vehicle is expected to leave the first charging area (that is, a charging process of the first electric vehicle is not affected), so as to implement power time division multiplexing of the charging station.

Optionally, a preset power allocation ratio of the first charging area and a preset power allocation ratio of the second charging area each may fall within [0, 1].

Optionally, a sum of a preset power allocation ratio of the first charging area and a preset power allocation ratio of the second charging area may be 1.

In conclusion, the charging apparatus for a charging station provided in this application can charge the electric vehicle in a charging area division manner and a time period division manner and with reference to the charging policy corresponding to the charging mode of the charging area. In addition, in this application, different electric vehicles located in different charging areas may be further charged through resumable charging, to improve time utilization of the charging station, and improve comprehensive utilization of the charging station.

According to a third aspect, this application provides an electronic device. The electronic device may include:
one or more processors; and
a memory, configured to store one or more programs.

When the one or more programs are executed by the one or more processors, the charging method provided in the first aspect and the possible implementations of the first aspect is implemented.

According to a fourth aspect, this application provides a computer-readable storage medium. The computer-readable storage medium stores a computer program. When the computer program is executed, the charging method provided in the first aspect and the possible implementations of the first aspect may be implemented.

According to a fifth aspect, this application provides a computer program. When the computer program is executed by a computer, the charging method provided in the first aspect and the possible implementations of the first aspect may be implemented.

It should be understood that the technical solutions in the second aspect to the fifth aspect of this application are the same as the technical solutions in the first aspect of this application. Beneficial effects achieved in the aspects and corresponding feasible implementations are similar, and details are not described again.

### BRIEF DESCRIPTION OF DRAWINGS

To describe the technical solutions in this application or in the conventional technology more clearly, the following briefly describes the accompanying drawings used for describing embodiments or the conventional technology. Apparently, the accompanying drawings in the following descriptions show some embodiments of this application, and a person of ordinary skill in the art may still derive other accompanying drawings from these accompanying drawings without creative efforts.
FIG. 1 is a schematic diagram of a structure of a charging station according to an embodiment of this application;
FIG. 2 is a schematic flowchart of a charging method for a charging station according to an embodiment of this application;
FIG. 3 is a schematic diagram of area division and time period division according to an embodiment of this application;
FIG. 4 is a schematic flowchart of a charging method for a charging station according to an embodiment of this application;
FIG. 5 is a schematic flowchart of a charging method for a charging station according to an embodiment of this application;
FIG. 6 is a schematic diagram of resumable charging according to an embodiment of this application;
FIG. 7 is a schematic diagram of area division and time period division according to an embodiment of this application;
FIG. 8 is a schematic diagram of area division and time period division according to an embodiment of this application;
FIG. 9 is a schematic diagram of area division and time period division according to an embodiment of this application; and
FIG. 10 is a schematic diagram of a structure of a charging apparatus for a charging station according to an embodiment of this application.

### DESCRIPTION OF EMBODIMENTS

The following describes technical solutions of this application with reference to accompanying drawings.

To make the objectives, technical solutions, and advantages of this application clearer, the following clearly and completely describes the technical solutions of this application with reference to the accompanying drawings in this application. It is clear that, the described embodiments are merely some rather than all of the embodiments of this application. All other embodiments obtained by a person of ordinary skill in the art based on embodiments of this application without creative efforts shall fall within the protection scope of this application.

In the specification, embodiments, claims, and accompanying drawings of this application, terms "first", "second", and the like are merely intended for distinguishing and description, and shall not be understood as an indication or implication of relative importance or an indication or implication of an order. In addition, the terms "include", "have", and any variant thereof are intended to cover non-exclusive inclusion, for example, include a series of steps or units. Methods, systems, products, or devices are not necessarily limited to those steps or units that are literally listed, but may include other steps or units that are not literally listed or that are inherent to such processes, methods, products, or devices.

It should be understood that in this application, "at least one (item)" means one or more and "a plurality of" means two or more. The term "and/or" is used for describing an association relationship between associated objects, and represents that three relationships may exist. For example, "A and/or B" may represent the following three cases: Only A exists, only B exists, and both A and B exist. Herein, A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one item (piece) in a, b, or c may indicate a, b, c, a and b, a and c, b and c, or a, b, and c. Herein, a, b, and c may be singular or plural.

Currently, with rapid development of electric vehicle technologies, a quantity of charging stations for charging an electric vehicle gradually increases. A plurality of charging piles may be disposed in the charging station, and each charging pile may be provided with one or more chargers, and charge the electric vehicle by using the charger.

Comprehensive utilization of the charging station is one of main indexes for measuring the charging station. The comprehensive utilization is usually determined by power utilization and time utilization of the charging station (total duration of charging the electric vehicle in the charging station within 24 hours/24 hours).

In scenarios such as a residential area and an industrial park, use time of the charging station is centralized, and a user does not move a completely charged electric vehicle in a timely manner. In this case, actual parking duration of the electric vehicle is greater than actual charging duration, and time utilization is low. Consequently, comprehensive utilization is low.

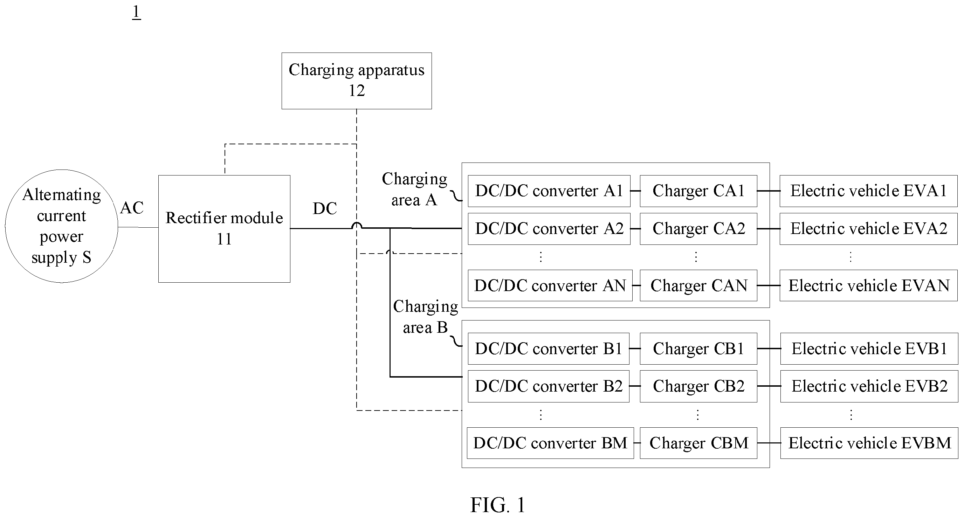

This application provides a charging method for a charging station, to improve the comprehensive utilization of the charging station. As shown in FIG. 1, a charging station 1 includes a plurality of charging areas (a charging area A (that is, a first charging area) and a charging area B (that is, a second charging area) shown in FIG. 1), a rectifier module 11, and a charging apparatus 12.

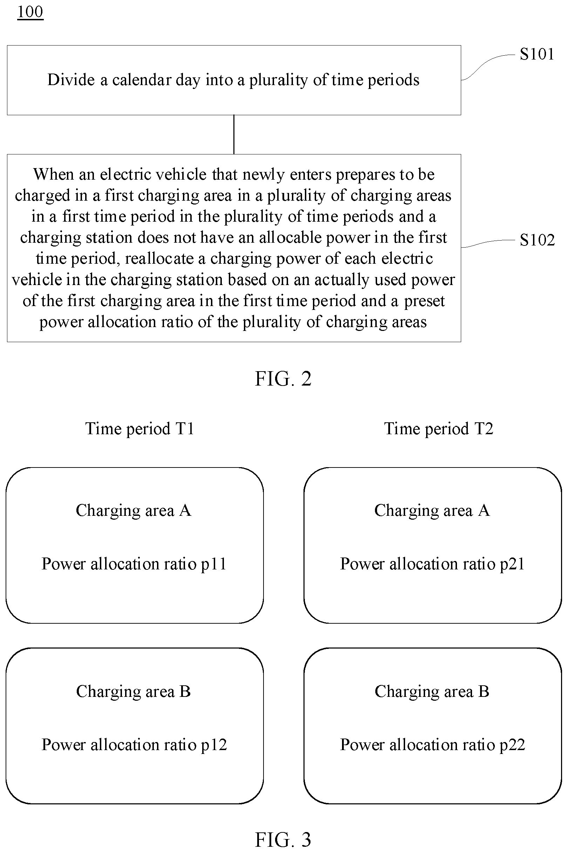

The rectifier module 11 is connected to an alternating current power supply S, and the rectifier module 11 may convert, into a direct current (direct current, DC), an alternating current (alternating current, AC) transmitted by the alternating current power supply S. The charging apparatus 12 may communicate with the rectifier module 11, the charging area A, and the charging area B (as shown by dashed lines in FIG. 2), and is configured to control the rectifier module 11, the charging area A, and the charging area B. The charging area A and the charging area B each are connected to the rectifier module 11 by using a direct current bus (as shown by solid lines in FIG. 2). In addition, the charging area A and the charging area B each include a plurality of charging piles (that is, a DC/DC converter A1, a DC/DC converter A2, ..., and a DC/DC converter AN in the charging area A, and a DC/DC converter B1, a DC/DC converter B2, ..., and a DC/DC converter BM in the charging area B). Each charging pile may charge, by using a charger (that is, a charger CA1, a charger CA2, ..., and a charger CAN (a power of each charger may be 90 kW to 240 kW), and a charger CB1, a charger CB2, ..., and a charger CBM (a power of each charger may be 15 kW to 30 kW) in FIG. 2) of the charging pile, an electric vehicle (that is, an electric vehicle EVA1, an electric vehicle EVA2, ..., an electric vehicle EVAN, and an electric vehicle EVB1, an electric vehicle EVB2, ..., and an electric vehicle EVBM in FIG. 2) that needs to be charged.

It should be noted that, in this embodiment of this application, an example in which there are a total of two charging areas of the charging area A and the charging area B is used for description. Certainly, a quantity of charging areas in the charging station may be adjusted based on a use state of the charging station. The quantity of charging areas is not limited in this embodiment of this application. Therefore, a control process 100 is shown in FIG. 2, and may be implemented by using the following steps.

Step S101: Divide a calendar day into a plurality of time periods.

Refer to FIG. 3. The calendar day (that is, 24 hours in a day) may be divided into a time period T1 and a time period T2, and the time period T1 and the time period T2 do not overlap.

Duration of the time period T1 and duration of the time period T2 each may be [0, 24h], and a sum of the duration of the time period T1 and the duration of the time period T2 may be 24h. For example, the time period T1 may be from 9:00 to 18:00, the duration of the time period T1 is 9h, and the time period T1 may be referred to as a daytime time period. In this case, the time period T2 may be from 18:00 to 9:00 of a next day, the duration of the time period T2 is 15h, and the time period T2 may be referred to as a night time period.

It should be noted that, in addition to a case in which the calendar day may be divided into the time period T1 and the time period T2 (that is, two time periods), the calendar day may be divided into more time periods such as three or four time periods. This is not limited in this embodiment of this application. If the calendar day is divided into more time periods such as three or four time periods, a sum of duration of the time periods may be 24h.

Step S102: When an electric vehicle that newly enters (which may be an electric vehicle that newly enters the charging area A or an electric vehicle that newly enters the charging area B) prepares to be charged in one (which may be the charging area A or the charging area B) of the plurality of charging areas in a first time period (which may be the time period T1 or the time period T2) in the plurality of time periods and the charging station does not have an allocable power in the first time period, reallocate a charging power of each electric vehicle in the charging station based on an actually used power of the first charging area in the first time period and a preset power allocation ratio of the plurality of charging areas.

The allocable power may indicate an available power in an output power of the charging station other than a power that meets a charging requirement of one or more electric vehicles that are being charged in the charging station. The charging requirement may indicate an expected charging capacity (for example, a state of charge is 90% or 95%) that needs to be reached, within expected parking duration (determined by a parking start time point of the electric vehicle in a charging area in which the electric vehicle is located and a time point at which the electric vehicle is expected to leave the charging area in which the electric vehicle is located, for example, 9h), by the one or more electric vehicles that are being charged in the charging station.

In this embodiment of this application, time division multiplexing charging of the output power of the charging station may be implemented in a charging area division manner and a time period division manner, to improve time utilization of the charging station, and further improve comprehensive time utilization of the charging station.

Optionally, a preset power allocation ratio of the charging area A in the time period T1/time period T2 may fall within [0, 1]. Similarly, a preset power allocation ratio of the charging area B in the time period T1/time period T2 may also fall within [0, 1].

Optionally, a sum of a preset power allocation ratio of the charging area A in the time period T1 and a preset power allocation ratio of the charging area B in the time period T1 is 1. Similarly, a sum of a preset power allocation ratio of the charging area A in the time period T2 and a preset power allocation ratio of the charging area B in the time period T2 is 1.

For example, still as shown in FIG. 3, the preset power allocation ratio of the charging area A in the time period T1 may be represented by p 11 (p11 ∈ [0, 1]), the preset power allocation ratio of the charging area B in the time period T1 may be represented by p12 (p12 ∈ [0, 1]), and p11+p12=1 is met. Herein, p11 may be set to 20%, and p12 may be set to 80%.

For another example, still as shown in FIG. 3, the preset power allocation ratio of the charging area A in the time period T2 may be represented by p21 (p1 ∈ [0, 1]), the preset power allocation ratio of the charging area B in the time period T2 may be represented by p22 (p22 ∈ [0, 1]), and p21+p22=1 is met. Herein, p21 may be set to 90%, and p22 may be set to 10%.

Optionally, a charging mode of the charging area A is different from a charging mode of the charging area B. In other words, a charging rate of the charging area A is different from a charging rate of the charging area B.

Further, the charging mode of the charging area A may be a slow charging mode. The slow charging mode may indicate that a first electric vehicle can be charged to an expected charging capacity (for example, a state of charge is 90% or 95%) in the charging area A within preset first charging duration (for example, 6h). For example, the electric vehicle is charged in the charging area A, and the state of charge of the electric vehicle may reach 90% within 6h.

The first electric vehicle may include an electric vehicle that newly enters the charging area A and/or an electric vehicle that is being charged in the charging area A.

Similarly, the charging mode of the charging area B may be a fast charging mode. The fast charging mode may indicate that a second electric vehicle can be charged to an expected charging capacity (for example, a state of charge is 90% or 95%) in the charging area B within preset second charging duration (for example, 2h). For example, the electric vehicle is charged in the charging area B, and the state of charge of the electric vehicle may reach 90% within 2h.

The second electric vehicle may include an electric vehicle that newly enters the charging area B and/or an electric vehicle that is being charged in the charging area B.

It should be noted that the preset first charging duration may be greater than the preset second charging duration. In other words, charging duration required for charging an electric vehicle to the expected charging capacity in the charging area A is longer than charging duration required for charging the same electric vehicle to the expected charging capacity in the charging area B.

For example, the charging rate of the charging area A may determine a charging time period for charging a first electric vehicle in the charging area A to a regional charging capacity. Similarly, the charging rate of the charging area B may determine a charging time period for charging a second electric vehicle in the charging area B to a regional charging capacity.

Optionally, the charging rate of the charging area A may be less than the charging rate of the charging area B. In other words, charging duration used when the charging area Ais selected to charge an electric vehicle to the expected charging capacity is greater than charging duration used when the charging area B is selected to charge the same electric vehicle to the expected charging capacity.

In a possible implementation, for the charging area A, step S102 may be implemented in the following two aspects:
Case 1: When the electric vehicle that newly enters the charging area A prepares to be charged in the charging area A in the time period T1/time period T2 and the charging station cannot meet, in the time period T1/time period T2, a charging requirement of the electric vehicle that newly enters the charging area A, if an actually used power of the charging area A in the time period T1/time period T2 is greater than or equal to a power allocated to the charging area A based on a preset power allocation ratio of the charging area A in the time period T1/time period T2,
a charging power of each charger in the charging area A in the time period T1/time period T2 may be reduced based on a charging requirement, in the time period T1/time period T2, of the electric vehicle that newly enters the charging area A, and the electric vehicle that newly enters the charging area A and the electric vehicle (that is, the first electric vehicle) that is being charged in the charging area A may be charged based on the reduced charging power of the charger in the time period T1/time period T2.

For example, it is assumed that the output power of the charging station is 2000 kW. If a power allocation ratio of the charging area A in the time period T1 is 20%, a power allocated to the charging area A based on 20% is 400 kW. If a power allocation ratio of the charging area B in the time period T1 is 80%, a power allocated to the charging area B based on 80% is 1600 kW.

Therefore, when an actually used power of the charging area A is 1000 kW (that is, 50% of the output power of the charging station, which exceeds 400 kW) and an actually used power of the charging area B is 1000 kW (less than 1600 kW), a charging power of each charger in the charging area A in the time period T1 may be reduced based on a charging requirement, in the time period T1, of the electric vehicle that newly enters the charging area A, and the electric vehicle that newly enters the charging area A and the electric vehicle that is being charged in the charging area A may be charged based on the reduced charging power of the charger in the time period T1.

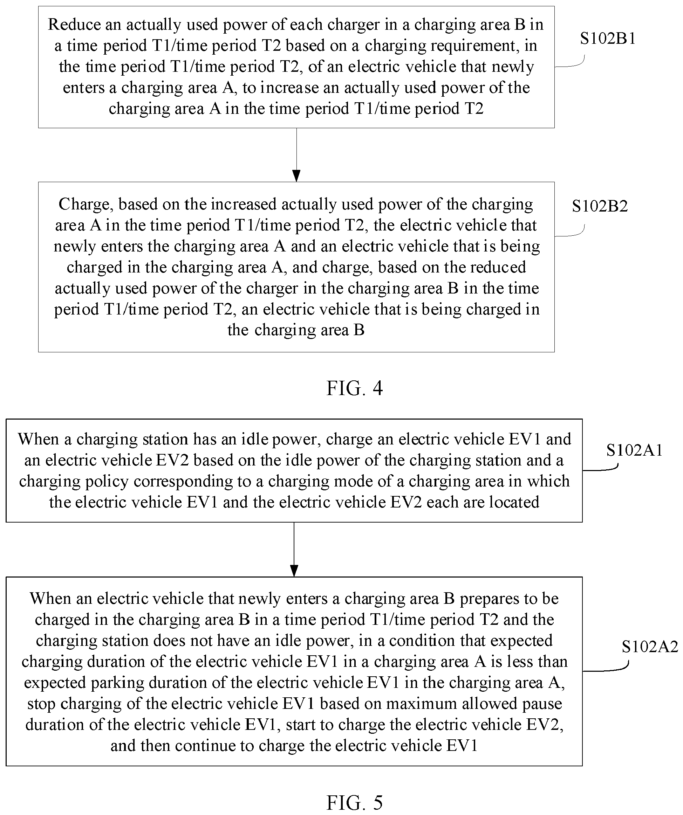

Case 2: When the electric vehicle that newly enters the charging area A prepares to be charged in the charging area A in the time period T1/time period T2 and the charging station cannot meet, in the time period T1/time period T2, a charging requirement of the electric vehicle that newly enters the charging area A, if an actually used power of the charging area A in the time period T1/time period T2 is less than a power allocated to the charging area A based on a preset power allocation ratio of the charging area A in the time period T1/time period T2, as shown in FIG. 4, step S102 may be implemented by using the following two steps.

Step S102B1: Reduce an actually used power of each charger in the charging area B in the time period T1/time period T2 based on a charging requirement, in the time period T1/time period T2, of the electric vehicle that newly enters the charging area A, to increase the actually used power of the charging area A in the time period T1/time period T2.

Step S102B2: Charge, based on the increased actually used power of the charging area A in the time period T1/time period T2, the electric vehicle that newly enters the charging area A and the electric vehicle that is being charged in the charging area A, and charge, based on the reduced actually used power of the charger in the charging area B in the time period T1/time period T2, the electric vehicle that is being charged in the charging area B.

For example, it is still assumed that the output power of the charging station is 2000 kW. If a power allocation ratio of the charging area A in the time period T1 is 20%, a power allocated to the charging area Abased on 20% is 400 kW. If a power allocation ratio of the charging area B in the time period T1 is 80%, a power allocated to the charging area B based on 80% is 1600 kW.

Therefore, when an actually used power of the charging area A is 200 kW (that is, 10% of the output power of the charging station, which is less than 400 kW) and an actually used power of the charging area B is 1800 kW (which exceeds 1600 kW), an actually used power of each charger in the charging area B in the time period T1 may be reduced based on a charging requirement, in the time period T1, of the electric vehicle that newly enters the charging area A, to increase an actually used power of the charging area A in the time period T1. It should be noted that the actually used power of the charging area A may be increased to a maximum of 400 kW.

The electric vehicle that newly enters the charging area A and the electric vehicle that is being charged in the charging area A are charged based on the increased actually used power of the charging area A in the time period T1, and the electric vehicle that is being charged in the charging area B is charged based on the reduced actually used power of the charger in the charging area B in the time period T1.

In another possible implementation, for the charging area B, step S102 may be further implemented in the following two cases:
Case 1: When the electric vehicle that newly enters the charging area B prepares to be charged in the charging area B in the time period T1/time period T2 and the charging station cannot meet, in the time period T1/time period T2, a charging requirement of the electric vehicle that newly enters the charging area B, if an actually used power of the charging area B in the time period T1/time period T2 is greater than or equal to a power allocated to the charging area B based on a preset power allocation ratio of the charging area B in the time period T1/time period T2,
a charging power of each charger in the charging area B in the time period T1/time period T2 may be reduced based on a charging requirement, in the time period T1/time period T2, of the electric vehicle that newly enters the charging area B, and the electric vehicle that newly enters the charging area B and the electric vehicle (that is, the second electric vehicle) that is being charged in the charging area B may be charged based on the reduced charging power of the charger in the time period T1/time period T2.

For example, it is assumed that the output power of the charging station is 2000 kW. If a power allocation ratio of the charging area A in the time period T2 is 20%, a power allocated to the charging area A based on 20% is 400 kW. If a power allocation ratio of the charging area B in the time period T2 is 80%, a power allocated to the charging area B based on 80% is 1600 kW.

Therefore, when an actually used power of the charging area B is 1800 kW (that is, 90% of the output power of the charging station, which exceeds 1600 kW) and an actually used power of the charging area A is 200 kW (less than 400 kW), a charging power of each charger in the charging area B in the time period T2 may be reduced based on a charging requirement, in the time period T2, of the electric vehicle that newly enters the charging area B, and the electric vehicle that newly enters the charging area B and the electric vehicle that is being charged in the charging area B may be charged based on the reduced charging power of the charger in the time period T2.

Case 2: When the electric vehicle that newly enters the charging area B prepares to be charged in the charging area B in the time period T1/time period T2 and the charging station cannot meet, in the time period T1/time period T2, a charging requirement of the electric vehicle that newly enters the charging area B, if an actually used power of the charging area B in the time period T1/time period T2 is less than a power allocated to the charging area B based on a preset power allocation ratio of the charging area B in the time period T1/time period T2,
an actually used power of each charger in the charging area A in the time period T1/time period T2 may be reduced based on a charging requirement, in the time period T1/time period T2, of the electric vehicle that newly enters the charging area B, to increase the actually used power of the charging area B in the time period T1 or the time period T2.

The electric vehicle that newly enters the charging area B and the electric vehicle that is being charged in the charging area B are charged based on the increased actually used power of the charging area B in the time period T1/time period T2, and the electric vehicle that is being charged in the charging area A is charged based on the reduced actually used power of the charger in the charging area A in the time period T1/time period T2.

For example, it is still assumed that the output power of the charging station is 2000 kW. If a power allocation ratio of the charging area A in the time period T2 is 20%, a power allocated to the charging area Abased on 20% is 400 kW. If a power allocation ratio of the charging area B in the time period T2 is 80%, a power allocated to the charging area B based on 80% is 1600 kW.

Therefore, when an actually used power of the charging area B is 1200 kW (that is, 60% of the output power of the charging station, less than 1600 kW) and an actually used power of the charging area A is 800 kW (which exceeds 400 kW), an actually used power of each charger in the charging area A in the time period T2 may be reduced based on a charging requirement, in the time period T2, of the electric vehicle that newly enters the charging area B, to increase an actually used power of the charging area B in the time period T2.

The electric vehicle that newly enters the charging area B and the electric vehicle that is being charged in the charging area B are charged based on the increased actually used power of the charging area B in the time period T2, and the electric vehicle that is being charged in the charging area A is charged based on the reduced actually used power of the charger in the charging area A in the time period T2.

In a possible implementation, the charging method provided in this embodiment of this application may further include the following process: In the time period T1/time period T2, when the charging station has an allocable power, the first electric vehicle and the second electric vehicle may be charged based on a charging mode of each charging area and a preset charging policy corresponding to the charging mode.

Optionally, the charging policy is related to the charging mode. To be specific, for the charging area A, because the charging mode of the charging area A is the slow charging mode, when the charging station has an allocable power, the first electric vehicle needs to be charged based on a charging policy corresponding to the slow charging mode. Similarly, for the charging area B, because the charging mode of the charging area B is the fast charging mode, when the charging station has an allocable power, the second electric vehicle needs to be charged based on a charging policy corresponding to the fast charging mode.

In a possible implementation, if two electric vehicles (that is, an electric vehicle (electric vehicle, EV) 1 and an electric vehicle EV2) need to be charged in the charging station, when the charging station has an allocable power, the electric vehicle EV1 and the electric vehicle EV2 may be charged by using the following steps.

Step S102A1: As shown in FIG. 5, when the charging station has an idle power, charge the electric vehicle EV1 and the electric vehicle EV2 based on the idle power of the charging station and a charging policy corresponding to a charging mode of a charging area in which the electric vehicle EV1 and the electric vehicle EV2 each are located.

The idle power indicates an unused power in the output power of the charging station other than a power that meets a charging requirement of the electric vehicle EV1 and the electric vehicle EV2, and the idle power is a part of the allocable power.

Step S102A2: As shown in FIG. 5, when the electric vehicle that newly enters the charging area B prepares to be charged in the charging area B in the time period T1/time period T2 and the charging station does not have an idle power, in a condition that expected charging duration of the electric vehicle EV1 in the charging area A is less than expected parking duration of the electric vehicle EV1 in the charging area A, stop charging of the electric vehicle EV1 based on maximum allowed pause duration of the electric vehicle EV1, start to charge the electric vehicle EV2, and then continue to charge the electric vehicle EV1. Herein, a charging process of the electric vehicle EV1 may be referred to as resumable charging.

The maximum allowed pause duration (which may be represented by Tₘₐₓ, for example, 3h) of the electric vehicle EV1 may be obtained based on the expected parking duration (which may be represented by Tₛₜₒₚ, for example, 9h) of the electric vehicle EV1 in the charging area A and the expected charging duration (which may be represented by T_{charge}, for example, 6h) of the electric vehicle EV1 in the charging area A. In other words, the expected parking duration Tₛₜₒₚ of the electric vehicle EV1 in the charging area A may be divided into the expected charging duration T_{charge} of the electric vehicle EV1 in the charging area A and the maximum allowed pause duration Tₘₐₓ of the electric vehicle EV1.

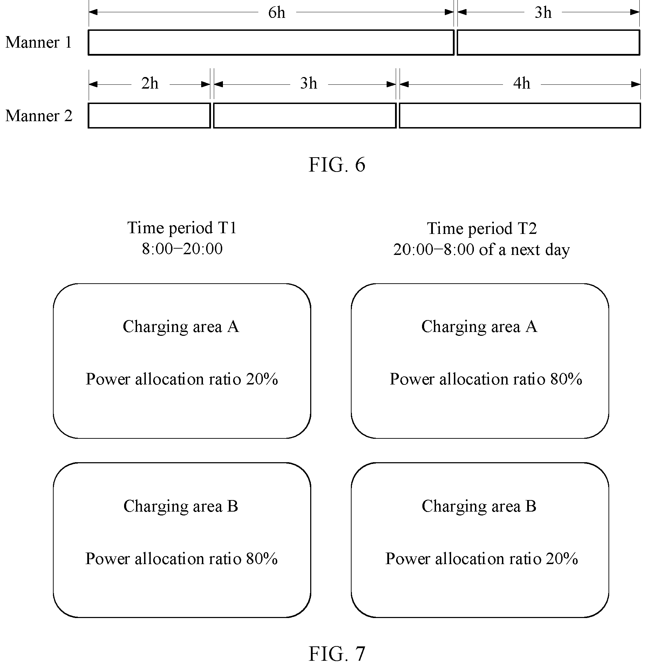

As shown in FIG. 6, if the electric vehicle EV1 is charged in the charging area A in the slow charging mode (that is, Manner 1 in FIG. 6) and the expected parking duration of the electric vehicle EV1 in the charging area A is 9h, charging starts from a parking start time point of the electric vehicle EV1 in the charging area A. After the expected charging duration 6h, an expected charging capacity of the electric vehicle EV1 may reach 90%, or the like. If charging stops when the electric vehicle EV1 is charged to 90%, charging stop duration of the electric vehicle EV1 (that is, duration from a charging completion time point to a time point at which the electric vehicle EV1 is expected to leave the charging area A) may be 3h.

If the electric vehicle EV1 is charged through resumable charging (that is, Manner 2 in FIG. 6), and similarly, the expected parking duration of the electric vehicle EV1 in the charging area A is 9h, charging starts from a parking start time point of the electric vehicle EV1 in the charging area A, charging stops for 3h (that is, the maximum allowed pause duration, where the electric vehicle EV2 is charged in this process) after charging is performed for 2h, and the electric vehicle EV1 continues to be charged for 4h, so that the electric vehicle EV1 is charged to 90%. It can be learned that the expected charging duration (that is, 6h) of the electric vehicle EV1 is divided into two time periods: 2h before charging stops and 4h within which charging continues, and the electric vehicle EV1 may also be charged to 90%.

Further, the foregoing resumable charging process may be implemented in the following two manners:
Manner 1: Within the maximum allowed pause duration (that is, 3h) of the electric vehicle EV1, charging of the electric vehicle EV1 stops, and the electric vehicle EV2 is charged; and the electric vehicle EV2 has reached an expected charging capacity (for example, 95% or 100%, that is, the electric vehicle EV2 completes charging) of the electric vehicle EV2 at a moment (for example, a moment 2.5h, where a moment of 3h may also be included) within the 3h. The electric vehicle EV1 may immediately continue to be charged at a moment at which the electric vehicle EV2 completes charging, until the electric vehicle EV1 is charged to the expected charging capacity (for example, 90%, that is, the electric vehicle EV1 completes charging).
Manner 2: Within the maximum allowed pause duration (that is, 3h) of the electric vehicle EV1, charging of the electric vehicle EV1 stops, and the electric vehicle EV2 is charged. However, if the electric vehicle EV2 does not reach expected charging capacity of the electric vehicle EV2 (for example, 95% or 100%, that is, the electric vehicle EV2 has not completed charging) within 3h, charging of the electric vehicle EV2 also needs to stop, and the electric vehicle EV1 continues to be charged, until the electric vehicle EV1 is charged to the expected charging capacity (for example, 90%, that is, the electric vehicle EV1 completes charging).

It can be understood that a power (which may be referred to as a scheduled power) used to charge the electric vehicle EV2 in a process of stopping charging of the electric vehicle EV1 is also a part of the allocable power. In other words, the allocable power may include two parts: the idle power (an unused power in the allocable power) and the scheduled power (a used and allocable power in the allocable power).

In this embodiment of this application, in a condition that the charging station does not have an idle power, resumable charging is performed on the electric vehicle EV1 in the charging area A in the slow charging mode, to not only implement charging of the electric vehicle EV2, but also ensure that the electric vehicle EV1 completes charging before a time point at which the electric vehicle EV1 is expected to leave the charging area A (that is, a charging process of the electric vehicle EV1 is not affected), so as to implement power time division multiplexing of the charging station.

In a possible implementation, after the electric vehicle (including the electric vehicle EV1 and/or the electric vehicle EV2) completes charging, a total charging fee of the electric vehicle may be obtained based on a charging area in which the electric vehicle is located and actual charging duration of the electric vehicle.

Optionally, different charging mechanisms may be set for the charging area A in the slow charging mode and the charging area B in the fast charging mode.

For example, in the charging area A, parking may be primary, and charging may be secondary. In this case, the total charging fee of the electric vehicle may include a charging fee (determined by a charging price per unit of the charging area A and actual charging duration of the electric vehicle in the charging area A) and a parking fee (that is, a fee corresponding to actual parking duration).

For another example, in the charging area B, charging may be primary, and parking may be secondary. In this case, the total charging fee of the electric vehicle may include a charging fee (determined by a charging price per unit of the charging area B and actual charging duration of the electric vehicle in the charging area B) and a timeout fee (that is, a fee corresponding to duration between a time point at which the electric vehicle actually leaves the charging station and a charging completion time point).

In conclusion, in the charging method for a charging station provided in this application, the electric vehicle can be charged in a charging area division manner and a time period division manner and with reference to the charging policy corresponding to the charging mode of the charging area. In addition, in this application, different electric vehicles located in different charging areas may be further charged through resumable charging, to improve time utilization of the charging station, and improve comprehensive utilization of the charging station.

In a first example, if the charging station is located in a residential area, as shown in FIG. 7, the charging station may include the charging area A (the charging mode is the slow charging mode) and the charging area B (the charging mode is the fast charging mode). Because most users inside the residential area use the charging station at night, and most users outside the residential area use the charging station at daytime, the charging area A in the slow charging mode is disposed inside the area, and the charging area B in the fast charging mode is disposed outside the area. In addition, based on a timetable of the residential area, the time period T1 may be from 8:00 to 20:00, the duration of the time period T1 is 12h, and the time period T1 may be referred to as a daytime time period. In this case, the time period T2 may be from 20:00 to 8:00 of a next day, the duration of the time period T2 is 12h, and the time period T2 may be referred to as a night time period.

Further, still as shown in FIG. 7, the preset power allocation ratio of the charging area A in the time period T1 may be set to 20%, and the preset power allocation ratio of the charging area B in the time period T1 may be set to 80%.

Similarly, the preset power allocation ratio of the charging area A in the time period T2 may be set to 90%, and the preset power allocation ratio of the charging area B in the time period T2 may be set to 10%.

Further, in the time period T1, if the actually used power of the charging area A is 10% of the output power of the charging power station, an available power of the charging area B may include a total of two parts: 80% of the output power of the charging power station and an idle power (that is, (1-80%-10%) of the output power of the charging power station, also the allocable power). In other words, a maximum available power of the charging area B may be 90% of the output power of the charging power station. It can be learned that the available power may include the idle power. In other words, the idle power is a part of the allocable power.

It should be noted that, in the first example, another process of the charging method for the charging station located in the residential area is the same as that described above. For details, refer to the foregoing descriptions. Details are not described herein again in this embodiment of this application.

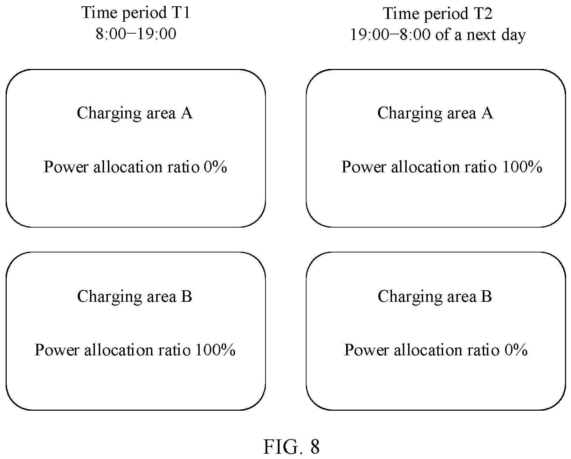

In a second example, if the charging station is located in a residential area, as shown in FIG. 8, the charging station may also include the charging area A (the charging mode is the slow charging mode) and the charging area B (the charging mode is the fast charging mode). The time period T1 may be from 8:00 to 19:00, the duration of the time period T1 is 11h, and the time period T1 may be referred to as a daytime time period. In this case, the time period T2 may be from 19:00 to 8:00 of a next day, the duration of the time period T2 is 13h, and the time period T2 may be referred to as a night time period.

Further, still as shown in FIG. 8, the preset power allocation ratio of the charging area A in the time period T1 may be set to 0% (that is, when the allocable power of the charging station is insufficient, the charging area A is forbidden to be used in the time period T1), and the preset power allocation ratio of the charging area B in the time period T1 may be set to 100%. In other words, when the allocable power of the charging station is insufficient, in a daytime time period, the charging station supports only fast charging of the electric vehicle in the charging area B, and does not support slow charging of the electric vehicle in the charging area A.

Similarly, the preset power allocation ratio of the charging area A in the time period T2 may be set to 100%, and the preset power allocation ratio of the charging area B in the time period T2 may be set to 0% (that is, when the allocable power of the charging station is insufficient, the charging area B is forbidden to be used in the time period T2). In other words, when the allocable power of the charging station is insufficient, in a night time period, the charging station supports only slow charging of the electric vehicle in the charging area A, and does not support fast charging of the electric vehicle in the charging area B.

It should be noted that, in the second example, another process of the charging method for the charging station located in the residential area is the same as that described above. For details, refer to the foregoing descriptions. Details are not described herein again in this embodiment of this application.

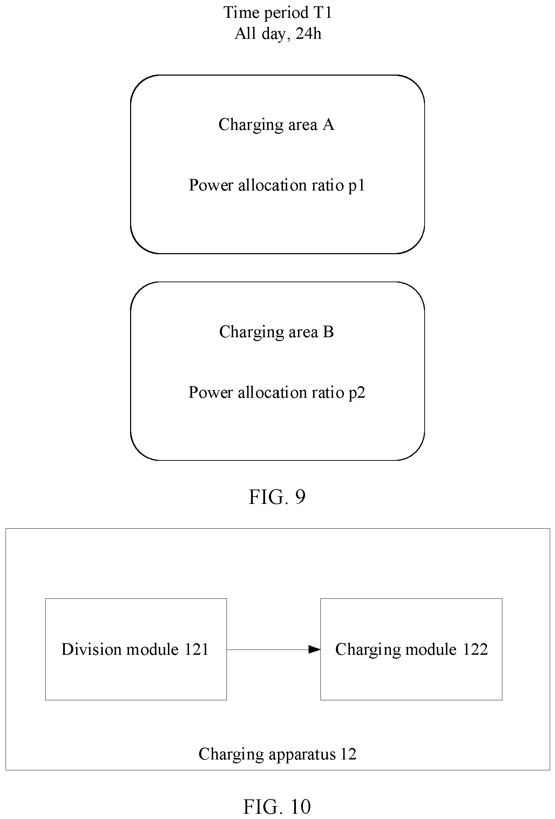

In a third example, if the charging station is located in an industrial park, as shown in FIG. 9, the charging station may also include the charging area A (the charging mode is the slow charging mode) and the charging area B (the charging mode is the fast charging mode), the charging area A is located inside the industrial park, and the charging area B is located outside the industrial park. However, because the charging station is used at daytime in most industrial parks, the calendar day may be used as a time period (that is, the calendar day is not divided into time periods), that is, the time period T1. The duration of the time period T1 is 24h. The preset power allocation ratio of the charging area A in the time period T1 and the preset power allocation ratio of the charging area B in the time period T1 may be set based on a charging requirement of the industrial park.

It should be also noted that, in the third example, another process of the charging method for the charging station located in the industrial park is the same as that described above. For details, refer to the foregoing descriptions. Details are not described herein again in this embodiment of this application.

Certainly, in addition to the listed three examples, the charging method for a charging station provided in this embodiment of this application may be further applied to another scenario. An application scenario of the charging station is not limited in this embodiment of this application.

An embodiment of this application further provides a charging apparatus for a charging station. For descriptions of the charging station, refer to the foregoing descriptions. Details are not described herein again in this embodiment of this application.

As shown in FIG. 10, a charging apparatus 12 may include a division module 121 and a charging module 122. The division module 121 is connected to the charging module 122.

Optionally, the division module 121 may be configured to divide a calendar day into a plurality of time periods.

Refer to FIG. 3. The calendar day (that is, 24 hours in a day) may be divided into a time period T1 and a time period T2, and the time period T1 and the time period T2 do not overlap.

Duration of the time period T1 and duration of the time period T2 each may be [0, 24h], and a sum of the duration of the time period T1 and the duration of the time period T2 may be 24h. For example, the time period T1 may be from 9:00 to 18:00, the duration of the time period T1 is 9h, and the time period T1 may be referred to as a daytime time period. In this case, the time period T2 may be from 18:00 to 9:00 of a next day, the duration of the time period T2 is 15h, and the time period T2 may be referred to as a night time period.

It should be noted that, in addition to a case in which the calendar day may be divided into a total of two time periods T1 and T2, the calendar day may be divided into more time periods such as three or four time periods. This is not limited in this embodiment of this application. If the calendar day is divided into more time periods such as three or four time periods, a sum of duration of the time periods may be 24h.

Further, the charging module 122 may be configured to: when an electric vehicle that newly enters (which may be an electric vehicle that newly enters the charging area A or an electric vehicle that newly enters the charging area B) prepares to be charged in one (which may be a charging area A or a charging area B) of a plurality of charging areas in a first time period (which may be the time period T1 or the time period T2) in the plurality of time periods and the charging station does not have an allocable power in the first time period, reallocate a charging power of each electric vehicle in the charging station based on an actually used power of the first charging area in the first time period and a preset power allocation ratio of the plurality of charging areas.

The allocable power may indicate an available power in an output power of the charging station other than a power that meets a charging requirement of one or more electric vehicles that are being charged in the charging station. The charging requirement may indicate an expected charging capacity (for example, a state of charge is 90% or 95%) that needs to be reached, within expected parking duration (determined by a parking start time point of the electric vehicle in a charging area in which the electric vehicle is located and a time point at which the electric vehicle is expected to leave the charging area in which the electric vehicle is located, for example, 9h), by the one or more electric vehicles that are being charged in the charging station.

In this embodiment of this application, time division multiplexing charging of the output power of the charging station is implemented by using a combination of a charging area division manner and a time period division manner, to improve time utilization of the charging station, and further improve comprehensive time utilization of the charging station.

Optionally, a preset power allocation ratio of the charging area A in the time period T1/time period T2 may fall within [0, 1]. Similarly, a preset power allocation ratio of the charging area B in the time period T1/time period T2 may also fall within [0, 1].

Optionally, a sum of a preset power allocation ratio of the charging area A in the time period T1 and a preset power allocation ratio of the charging area B in the time period T1 is 1. Similarly, a sum of a preset power allocation ratio of the charging area A in the time period T2 and a preset power allocation ratio of the charging area B in the time period T2 is 1.

For example, still as shown in FIG. 3, the preset power allocation ratio of the charging area A in the time period T1 may be represented by p11 (p11E[0, 1]), the preset power allocation ratio of the charging area B in the time period T1 may be represented by p12 (p12E[0, 1]), and p11+p12=1 is met. Herein, p11 may be set to 20%, and p12 may be set to 80%.

For another example, still as shown in FIG. 3, the preset power allocation ratio of the charging area A in the time period T2 may be represented by p21 (p1 E[0, 1]), the preset power allocation ratio of the charging area B in the time period T2 may be represented by p22 (p22G[0, 1]), and p21+p22=1 is met. Herein, p21 may be set to 90%, and p22 may be set to 10%.

Optionally, the plurality of areas may include the charging area A (that is, the first charging area) and the charging area B (that is, a second charging area). Optionally, a charging mode of the charging area A is different from a charging mode of the charging area B. In other words, a charging rate of the charging area A is different from a charging rate of the charging area B.

Further, the charging mode of the charging area A may be a slow charging mode. The slow charging mode may indicate that a first electric vehicle can be charged to an expected charging capacity (for example, a state of charge is 90% or 95%) in the charging area A within preset first charging duration (for example, 6h). For example, the electric vehicle is charged in the charging area A, and the state of charge of the electric vehicle may reach 90% within 6h.

The first electric vehicle may include an electric vehicle that newly enters the charging area A and/or an electric vehicle that is being charged in the charging area A.

Similarly, the charging mode of the charging area B may be a fast charging mode. The fast charging mode may indicate that a second electric vehicle can be charged to an expected charging capacity (for example, a state of charge is 90% or 95%) in the charging area B within preset second charging duration (for example, 2h). For example, the electric vehicle is charged in the charging area B, and the state of charge of the electric vehicle may reach 90% within 2h.

The second electric vehicle may include an electric vehicle that newly enters the charging area B and/or an electric vehicle that is being charged in the charging area B.

It should be noted that the preset first charging duration may be greater than the preset second charging duration. In other words, charging duration required for charging an electric vehicle to the expected charging capacity in the charging area A is longer than charging duration required for charging the same electric vehicle to the expected charging capacity in the charging area B.

For example, the charging rate of the charging area A may determine a charging time period for charging a first electric vehicle in the charging area A to a regional charging capacity. Similarly, the charging rate of the charging area B may determine a charging time period for charging a second electric vehicle in the charging area B to a regional charging capacity.

Optionally, the charging rate of the charging area A may be less than the charging rate of the charging area B. In other words, charging duration used when the charging area A is selected to charge an electric vehicle to the expected charging capacity is greater than charging duration used when the charging area B is selected to charge the same electric vehicle to the expected charging capacity.

In a possible implementation, for the first charging area, the charging module 122 may be configured to:
when the electric vehicle that newly enters the charging area A prepares to be charged in the charging area A in the time period T1/time period T2 and the charging station cannot meet, in the time period T1/time period T2, a charging requirement of the electric vehicle that newly enters the charging area A, if an actually used power of the charging area A in the time period T1/time period T2 is greater than or equal to a power allocated to the charging area A based on a preset power allocation ratio of the charging area A in the time period T1/time period T2,
reduce a charging power of each charger in the charging area A in the time period T1/time period T2 based on a charging requirement, in the time period T1/time period T2, of the electric vehicle that newly enters the charging area A, and charge, based on the reduced charging power of the charger in the time period T1/time period T2, the electric vehicle that newly enters the charging area A and the electric vehicle (that is, the first electric vehicle) that is being charged in the charging area A.

For example, it is assumed that the output power of the charging station is 2000 kW. If a power allocation ratio of the charging area A in the time period T1 is 20%, a power allocated to the charging area A based on 20% is 400 kW. If a power allocation ratio of the charging area B in the time period T1 is 80%, a power allocated to the charging area B based on 80% is 1600 kW.

Therefore, when an actually used power of the charging area A is 1000 kW (that is, 50% of the output power of the charging station, which exceeds 400 kW) and an actually used power of the charging area B is 1000 kW (less than 1600 kW), the charging module 122 may reduce a charging power of each charger in the charging area A in the time period T1 based on a charging requirement, in the time period T1, of the electric vehicle that newly enters the charging area A, and charge, based on the reduced charging power of the charger in the time period T1, the electric vehicle that newly enters the charging area A and the electric vehicle that is being charged in the charging area A.

In another possible implementation, for the first charging area, the charging module 122 may be further configured to:
when the electric vehicle that newly enters the charging area A prepares to be charged in the charging area A in the time period T1/time period T2 and the charging station cannot meet, in the time period T1/time period T2, a charging requirement of the electric vehicle that newly enters the charging area A, if an actually used power of the charging area A in the time period T1/time period T2 is less than a power allocated to the charging area A based on a preset power allocation ratio of the charging area A in the time period T1/time period T2,
the charging module 122 may reduce an actually used power of each charger in the charging area B in the time period T1/time period T2 based on a charging requirement, in the time period T1/time period T2, of the electric vehicle that newly enters the charging area A, to increase the actually used power of the charging area A in the time period T1/time period T2; and
the charging module 122 charges, based on the increased actually used power of the charging area A in the time period T1/time period T2, the electric vehicle that newly enters the charging area A and the electric vehicle that is being charged in the charging area A, and charges, based on the reduced actually used power of the charger in the charging area B in the time period T1/time period T2, the electric vehicle that is being charged in the charging area B.

For example, it is still assumed that the output power of the charging station is 2000 kW. If a power allocation ratio of the charging area A in the time period T1 is 20%, a power allocated to the charging area Abased on 20% is 400 kW. If a power allocation ratio of the charging area B in the time period T1 is 80%, a power allocated to the charging area B based on 80% is 1600 kW.

Therefore, when the actually used power of the charging area A is 200 kW (that is, 10% of the output power of the charging station, less than 400 kW), and in this case, the actually used power of the charging area B is 1800 kW (which exceeds 1600 kW), the charging module 122 may reduce the actually used power of each charger in the charging area B in the time period T1 based on a charging requirement of the electric vehicle that newly enters the charging area A in the time period T1, to increase actually used power of the charging area A in the time period T1. It should be noted that the actually used power of the charging area A may be increased to a maximum of 400 kW.

The charging module 122 charges, based on the increased actually used power of the charging area A in the time period T1, the electric vehicle that newly enters the charging area A and the electric vehicle that is being charged in the charging area A, and charges, based on the reduced actually used power of the charger in the charging area B in the time period T1, the electric vehicle that is being charged in the charging area B.

In a possible implementation, for the charging area B, the charging module 122 may be configured to:
when the electric vehicle that newly enters the charging area B prepares to be charged in the charging area B in the time period T1/time period T2 and the charging station cannot meet, in the time period T1/time period T2, a charging requirement of the electric vehicle that newly enters the charging area B, if an actually used power of the charging area B in the time period T1/time period T2 is greater than or equal to a power allocated to the charging area B based on a preset power allocation ratio of the charging area B in the time period T1/time period T2,
the charging module 122 may reduce a charging power of each charger in the charging area B in the time period T1/time period T2 based on a charging requirement, in the time period T1/time period T2, of the electric vehicle that newly enters the charging area B, and charge, based on the reduced charging power of the charger in the time period T1/time period T2, the electric vehicle that newly enters the charging area B and the electric vehicle (that is, the second electric vehicle) that is being charged in the charging area B.

For example, it is assumed that the output power of the charging station is 2000 kW. If a power allocation ratio of the charging area A in the time period T2 is 20%, a power allocated to the charging area A based on 20% is 400 kW. If a power allocation ratio of the charging area B in the time period T2 is 80%, a power allocated to the charging area B based on 80% is 1600 kW.

Therefore, when the actually used power of the charging area B is 1800 kW (that is, 90% of the output power of the charging station, which exceeds 1600 kW) and the actually used power of the charging area A is 200 kW (less than 400 kW), the charging module 122 may reduce a charging power of each charger in the charging area B in the time period T2 based on a charging requirement, in the time period T2, of the electric vehicle that newly enters the charging area B, and charge, based on the reduced charging power of the charger in the time period T2, the electric vehicle that newly enters the charging area B and the electric vehicle that is being charged in the charging area B.

In another possible implementation, for the charging area B, the charging module 122 may be further configured to:
when the electric vehicle that newly enters the charging area B prepares to be charged in the charging area B in the time period T1/time period T2 and the charging station cannot meet, in the time period T1/time period T2, a charging requirement of the electric vehicle that newly enters the charging area B, if an actually used power of the charging area B in the time period T1/time period T2 is less than a power allocated to the charging area B based on a preset power allocation ratio of the charging area B in the time period T1/time period T2,
the charging module 122 may reduce an actually used power of each charger in the charging area A in the time period T1/time period T2 based on a charging requirement, in the time period T1/time period T2, of the electric vehicle that newly enters the charging area B, to increase the actually used power of the charging area B in the time period T1 or the time period T2; and
the charging module 122 may charge, based on the increased actually used power of the charging area B in the time period T1/time period T2, the electric vehicle that newly enters the charging area B and the electric vehicle that is being charged in the charging area B, and charge, based on the reduced actually used power of the charger in the charging area A in the time period T1/time period T2, the electric vehicle that is being charged in the charging area A.

For example, it is still assumed that the output power of the charging station is 2000 kW. If a power allocation ratio of the charging area A in the time period T2 is 20%, a power allocated to the charging area Abased on 20% is 400 kW. If a power allocation ratio of the charging area B in the time period T2 is 80%, a power allocated to the charging area B based on 80% is 1600 kW.

Therefore, when the actually used power of the charging area B is 1200 kW (that is, 60% of the output power of the charging station, less than 1600 kW), and in this case, the actually used power of the charging area A is 800 kW (which exceeds 400 kW), the charging module 122 may reduce the actually used power of each charger in the charging area A in the time period T2 based on a charging requirement of the electric vehicle that newly enters the charging area B in the time period T2, to increase actually used power of the charging area B in the time period T2.

The charging module 122 charges, based on the increased actually used power of the charging area B in the time period T2, the electric vehicle that newly enters the charging area B and the electric vehicle that is being charged in the charging area B, and charges, based on the reduced actually used power of the charger in the charging area A in the time period T2, the electric vehicle that is being charged in the charging area A.

Optionally, the charging module 122 may be further configured to: in the time period T1/time period T2, when the charging station has an allocable power, charge the first electric vehicle and the second electric vehicle based on a charging mode of each charging area and a preset charging policy corresponding to the charging mode.

In a possible implementation, the charging module 122 may set the charging policy corresponding to the charging mode. To be specific, for the charging area A, because the charging mode of the charging area A is the slow charging mode, when the charging station has an allocable power, the charging module 122 may set a charging policy corresponding to the slow charging mode, to charge the electric vehicle. Similarly, for the charging area B, because the charging mode of the charging area B is the fast charging mode, when the charging station has an allocable power, the charging module 122 may set a charging policy corresponding to the fast charging mode, to charge the electric vehicle.

Further, if two electric vehicles (that is, the electric vehicle EV1 and the electric vehicle EV2) need to be charged in the charging station, when the charging station has an allocable power, the charging module 122 may charge the electric vehicle EV1 and the electric vehicle EV2 in the following two cases.

Case 1: When the charging station has an idle power, the charging module 122 may charge the electric vehicle EV1 and the electric vehicle EV2 based on the idle power of the charging station and a charging policy corresponding to a charging mode of a charging area in which the electric vehicle EV1 and the electric vehicle EV2 each are located.

The idle power indicates an unused power in the output power of the charging station other than a power that meets a charging requirement of the electric vehicle EV1 and the electric vehicle EV2, and the idle power is a part of the allocable power.

Case 2: When the electric vehicle that newly enters the charging area B prepares to be charged in the charging area B in the time period T1/time period T2 and the charging station does not have an idle power, in a condition that the electric vehicle EV2 is located in the charging area B and expected charging duration of the electric vehicle EV1 in the charging area A is less than expected parking duration of the electric vehicle EV1 in the charging area A, the charging module 122 may stop charging of the electric vehicle EV1 based on maximum allowed pause duration of the electric vehicle EV1, start to charge the electric vehicle EV2, and then continue to charge the electric vehicle EV1. Herein, a charging process of the electric vehicle EV1 may be referred to as resumable charging.

The maximum allowed pause duration (which may be represented by Tₘₐₓ, for example, 3h) of the electric vehicle EV1 may be obtained based on the expected parking duration (which may be represented by Tₛₜₒₚ, for example, 9h) of the electric vehicle EV1 in the charging area A and the expected charging duration (which may be represented by T_{charge}, for example, 6h) of the electric vehicle EV1 in the charging area A. In other words, the expected parking duration Tₛₜₒₚ of the electric vehicle EV1 in the charging area A may be divided into the expected charging duration T_{charge} of the electric vehicle EV1 in the charging area A and the maximum allowed pause duration Tₘₐₓ of the electric vehicle EV1.

Still refer to FIG. 6. If the charging module 122 charges the electric vehicle EV1 in the charging area A in the slow charging mode (that is, Manner 1 in FIG. 6) and the expected parking duration of the electric vehicle EV1 in the charging area A is 9h, charging starts from a parking start time point of the electric vehicle EV1 in the charging area A. After the expected charging duration 6h, an expected charging capacity of the electric vehicle EV1 may reach 90%, or the like. If charging stops when the electric vehicle EV1 is charged to 90%, charging stop duration of the electric vehicle EV1 (that is, duration from a charging completion time point to a time point at which the electric vehicle EV1 is expected to leave the charging area A) may be 3h.

If the charging module 122 charges the electric vehicle EV1 through resumable charging (that is, Manner 2 in FIG. 6), and similarly, the expected parking duration of the electric vehicle EV1 in the charging area A is 9h, charging starts from a parking start time point of the electric vehicle EV1 in the charging area A, charging stops for 3h (that is, the maximum allowed pause duration, where the electric vehicle EV2 is charged in this process) after charging is performed for 2h, and the electric vehicle EV1 continues to be charged for 4h, so that the electric vehicle EV1 is charged to 90%. It can be learned that the expected charging duration (that is, 6h) of the electric vehicle EV 1 is divided into two time periods: 2h before charging stops and 4h within which charging continues, and the electric vehicle EV1 may also be charged to 90%.

Further, the charging module 122 may be controlled to charge the electric vehicle EV1 and the electric vehicle EV2 through resumable charging in the following two manners:
Manner 1: Within the maximum allowed pause duration (that is, 3h) of the electric vehicle EV1, the charging module 122 charges the electric vehicle EV2; and the electric vehicle EV2 has reached an expected charging capacity (for example, 95% or 100%, that is, the electric vehicle EV2 completes charging) of the electric vehicle EV2 at a moment (for example, a moment of 2.5h, where a moment of 3h may also be included) within the 3h. The charging module 122 may immediately continue to charge the electric vehicle EV1 at a moment at which the electric vehicle EV2 completes charging, until the electric vehicle EV1 is charged to the expected charging capacity (for example, 90%, that is, the electric vehicle EV1 completes charging).
Manner 2: Within the maximum allowed pause duration (that is, 3h) of the electric vehicle EV1, the charging module 122 charges the electric vehicle EV2. However, if the electric vehicle EV2 does not reach expected charging capacity of the electric vehicle EV2 (for example, 95% or 100%, that is, the electric vehicle EV2 has not completed charging) within 3h, charging of the electric vehicle EV2 also needs to stop, and the charging module 122 continues to charge the electric vehicle EV1, until the electric vehicle EV1 is charged to the expected charging capacity (for example, 90%, that is, the electric vehicle EV1 completes charging).

It can be understood that a power (which may be referred to as a scheduled power) used to charge the electric vehicle EV2 in a process of stopping charging of the electric vehicle EV1 is also a part of the allocable power. In other words, the allocable power may include two parts: the idle power (an unused power in the allocable power) and the scheduled power (a used and allocable power in the allocable power).

In this embodiment of this application, in a condition that the charging station does not have an idle power, resumable charging is performed on the electric vehicle EV1 by the charging module 1 in the charging area A in the slow charging mode, to not only implement charging of the electric vehicle EV2, but also ensure that the electric vehicle EV1 completes charging before a time point at which the electric vehicle EV1 is expected to leave the charging area A (that is, a charging process of the electric vehicle EV1 is not affected), so as to implement power time division multiplexing of the charging station.

In a possible implementation, after the electric vehicle (including the electric vehicle EV1 and/or the electric vehicle EV2) completes charging, the charging module 122 may obtain a total charging fee of the electric vehicle based on a charging area in which the electric vehicle is located and actual charging duration of the electric vehicle.

Optionally, different charging mechanisms may be set for the charging area A in the slow charging mode and the charging area B in the fast charging mode.

For example, the charging module 122 may set that in the charging area A, parking may be primary, and charging may be secondary. In this case, the total charging fee of the electric vehicle may include a charging fee (determined by a charging price per unit of the charging area A and actual charging duration of the electric vehicle in the charging area A) and a parking fee (that is, a fee corresponding to actual parking duration).

For another example, the charging module 122 may set that in the charging area B, charging may be primary, and parking may be secondary. In this case, the total charging fee of the electric vehicle may include a charging fee (determined by a charging price per unit of the charging area B and actual charging duration of the electric vehicle in the charging area B) and a timeout fee (that is, a fee corresponding to duration between a time point at which the electric vehicle actually leaves the charging station and a charging completion time point).

In conclusion, the charging apparatus for a charging station provided in this application can charge the electric vehicle in a charging area division manner and a time period division manner and with reference to the charging policy corresponding to the charging mode of the charging area. In addition, in this application, different electric vehicles located in different charging areas may be further charged through resumable charging, to improve time utilization of the charging station, and improve comprehensive utilization of the charging station.

An embodiment of this application further provides an electronic device. The electronic device may include:
one or more processors; and
a memory, configured to store one or more programs.

When the one or more programs are executed by the one or more processors, the charging method provided in the foregoing embodiments may be implemented.

An embodiment of this application further provides a computer-readable storage medium. The computer-readable storage medium stores a computer program, and when the computer program is executed, the computer-readable storage medium may implement the charging method provided in the foregoing embodiments.

An embodiment of this application further provides a computer program. When the computer program is executed by a computer, the computer program may implement the charging method provided in the foregoing embodiments.

The charging apparatus, the electronic device, the computer-readable storage medium, and the computer program provided in embodiments of this application are all configured to perform the charging method provided above. Therefore, for beneficial effects that can be achieved by the charging apparatus, the electronic device, the computer-readable storage medium, and the computer program, refer to the beneficial effects of the corresponding charging method provided above. Details are not described herein again.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, for example, a USB flash drive, a removable hard disk, a read-only memory (Read-only Memory, ROM), a random access memory (Random Access Memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging method for a charging station, wherein the charging station comprises a plurality of charging areas, and the charging method comprises:
dividing a calendar day into a plurality of time periods; and
when a terminal that newly enters prepares to be charged in a first charging area in the plurality of charging areas in a first time period in the plurality of time periods and the charging station does not have an allocable power in the first time period, reallocating a charging power of each terminal in the charging station based on an actually used power of the first charging area in the first time period and a preset power allocation ratio of the plurality of charging areas, wherein
the allocable power indicates an available power in an output power of the charging station other than a power that meets a charging requirement of a terminal that is being charged in the charging station, and the charging requirement indicates an expected charging capacity that needs to be reached, within expected parking duration, by the terminal that is being charged in the charging station.

2. The charging method according to claim 1, wherein the plurality of charging areas further comprise a second charging area; and
a charging mode or a charging rate of the first charging area is different from a charging mode or a charging rate of the second charging area.

3. The charging method according to claim 2, wherein the charging mode of the first charging area is a slow charging mode, the slow charging mode indicates that a first terminal can be charged to the expected charging capacity in the first charging area within preset first charging duration, and the first terminal comprises a terminal that newly enters the first charging area and/or a terminal that is being charged in the first charging area;
the charging mode of the second charging area is a fast charging mode, the fast charging mode indicates that a second terminal can be charged to the expected charging capacity in the second charging area within preset second charging duration, and the second terminal indicates a terminal that newly enters the second charging area and/or a terminal that is being charged in the second charging area; and
the first charging duration is greater than the second charging duration.

4. The charging method according to claim 3, wherein the reallocating a charging power of each terminal in the charging station based on an actually used power of the first charging area in the first time period and a preset power allocation ratio of the plurality of charging areas comprises:
when the terminal that newly enters the first charging area prepares to be charged in the first charging area in the first time period and the charging station cannot meet, in the first time period, a charging requirement of the terminal that newly enters the first charging area, if the actually used power of the first charging area in the first time period is greater than or equal to a power allocated to the first charging area based on a preset power allocation ratio of the first charging area in the first time period,reducing a charging power of each charger in the first charging area in the first time period based on a charging requirement, in the first time period, of the terminal that newly enters the first charging area, and charging, based on the reduced charging power of the charger in the first time period, the terminal that newly enters the first charging area and the terminal that is being charged in the first charging area.

5. The charging method according to claim 3, wherein the reallocating a charging power of each terminal in the charging station based on an actually used power of the first charging area in the first time period and a preset power allocation ratio of the plurality of charging areas comprises:
when the terminal that newly enters the first charging area prepares to be charged in the first charging area in the first time period and the charging station cannot meet, in the first time period, a charging requirement of the terminal that newly enters the first charging area, if the actually used power of the first charging area in the first time period is less than a power allocated to the first charging area based on a preset power allocation ratio of the first charging area in the first time period,reducing an actually used power of each charger in the second charging area in the first time period based on a charging requirement, in the first time period, of the terminal that newly enters the first charging area, to increase the actually used power of the first charging area in the first time period; and
charging, based on the increased actually used power of the first charging area in the first time period, the terminal that newly enters the first charging area and the terminal that is being charged in the first charging area, and charging, based on the reduced actually used power of the charger in the second charging area in the first time period, the terminal that is being charged in the second charging area.

6. The charging method according to claim 3, wherein the charging method further comprises:
when the terminal that newly enters the second charging area prepares to be charged in the second charging area in the first time period and the charging station does not have an allocable power in the first time period, reallocating the charging power of each terminal in the charging station based on an actually used power of the second charging area in the first time period and the preset power allocation ratio of the plurality of charging areas.

7. The charging method according to claim 6, wherein the reallocating the charging power of each terminal in the charging station based on an actually used power of the second charging area in the first time period and the preset power allocation ratio of the plurality of charging areas comprises:
when the terminal that newly enters the second charging area prepares to be charged in the second charging area in the first time period and the charging station cannot meet, in the first time period, a charging requirement of the terminal that newly enters the second charging area, if the actually used power of the second charging area in the first time period is greater than or equal to a power allocated to the second charging area based on a preset power allocation ratio of the second charging area in the first time period,reducing a charging power of each charger in the second charging area in the first time period based on a charging requirement, in the first time period, of the terminal that newly enters the second charging area, and charging, based on the reduced charging power of the charger in the first time period, the terminal that newly enters the second charging area and the terminal that is being charged in the second charging area.

8. The charging method according to claim 6, wherein the reallocating the charging power of each terminal in the charging station based on an actually used power of the second charging area in the first time period and the preset power allocation ratio of the plurality of charging areas comprises:
when the terminal that newly enters the second charging area prepares to be charged in the second charging area in the first time period and the charging station cannot meet, in the first time period, a charging requirement of the terminal that newly enters the second charging area, if the actually used power of the second charging area in the first time period is less than a power allocated to the second charging area based on a preset power allocation ratio of the second charging area in the first time period,reducing an actually used power of each charger in the first charging area in the first time period based on a charging requirement, in the first time period, of the terminal that newly enters the second charging area, to increase the actually used power of the second charging area in the first time period; and
charging, based on the increased actually used power of the second charging area in the first time period, the terminal that newly enters the second charging area and the terminal that is being charged in the second charging area, and charging, based on the reduced actually used power of the charger in the first charging area in the first time period, the terminal that is being charged in the first charging area.

9. The charging method according to any one of claims 3 to 8, wherein the charging method further comprises:
in the first time period, when the charging station has an allocable power, charging the first terminal and the second terminal based on a charging mode of each charging area and a preset charging policy corresponding to the charging mode.

10. The charging method according to claim 9, wherein the charging the first terminal and the second terminal based on a charging mode of each charging area and a preset charging policy corresponding to the charging mode comprises:
in the first time period, when the charging station has an idle power, charging the first terminal and the second terminal based on the idle power of the charging station and a charging policy corresponding to a charging mode of a charging area in which the first terminal and the second terminal each are located, wherein the idle power indicates an unused power in the output power of the charging station other than a power that meets charging requirements of the first terminal and the second terminal, and the idle power is a part of the allocable power; and
in the first time period, when the terminal that newly enters the second charging area prepares to be charged in the second charging area in the first time period and the charging station does not have an idle power, in a condition that expected charging duration of the first terminal in the first charging area is less than expected parking duration of the first terminal in the first charging area, stopping charging of the first terminal based on maximum allowed pause duration of the first terminal, starting to charge the terminal that newly enters the second charging area, and then continuing to charge the first terminal, wherein the maximum allowed pause duration of the first terminal is obtained based on the expected parking duration of the first terminal in the first charging area and the expected charging duration of the first terminal in the first charging area.

11. The charging method according to any one of claims 2 to 10, wherein a sum of a preset power allocation ratio of the first charging area and a preset power allocation ratio of the second charging area is 1.

12. A charging apparatus for a charging station, wherein the charging station comprises a plurality of charging areas, and the charging apparatus comprises:
a division module, configured to divide a calendar day into a plurality of time periods; and
a charging module, configured to: when a terminal that newly enters prepares to be charged in a first charging area in the plurality of charging areas in a first time period in the plurality of time periods and the charging station does not have an allocable power in the first time period, reallocate a charging power of each terminal in the charging station based on an actually used power of the first charging area in the first time period and a preset power allocation ratio of the plurality of charging areas, wherein
the allocable power indicates an available power in an output power of the charging station other than a power that meets a charging requirement of a terminal that is being charged in the charging station, and the charging requirement indicates an expected charging capacity that needs to be reached, before a time point at which the terminal is expected to leave a charging area in which the terminal is located, by the terminal that is being charged in the charging station.

13. The charging apparatus according to claim 12, wherein the plurality of charging areas further comprise a second charging area; and
a charging mode or a charging rate of the first charging area is different from a charging mode or a charging rate of the second charging area.

14. The charging apparatus according to claim 13, wherein the charging mode of the first charging area is a slow charging mode, the slow charging mode indicates that a first terminal can be charged to the expected charging capacity in the first charging area within preset first charging duration, and the first terminal comprises a terminal that newly enters the first charging area and/or a terminal that is being charged in the first charging area;
the charging mode of the second charging area is a fast charging mode, the fast charging mode indicates that a second terminal can be charged to the expected charging capacity in the second charging area within preset second charging duration, and the second terminal indicates a terminal that newly enters the second charging area and/or a terminal that is being charged in the second charging area; and
the first charging duration is greater than the second charging duration.

15. The charging apparatus according to claim 14, wherein the charging module is configured to:
when the actually used power of the first charging area in the first time period is greater than or equal to a power allocated to the first charging area based on a preset power allocation ratio of the first charging area in the first time period,reduce a charging power of each charger in the first charging area in the first time period based on a charging requirement, in the first time period, of the terminal that newly enters the first charging area, and charge, based on the reduced charging power of the charger in the first time period, the terminal that newly enters the first charging area and the terminal that is being charged in the first charging area.

16. The charging apparatus according to claim 14, wherein the charging module is configured to:
when the terminal that newly enters the first charging area needs to be charged in the first charging area in the first time period and the charging station cannot meet, in the first time period, a charging requirement of the terminal that newly enters the first charging area, if the actually used power of the first charging area in the first time period is less than a power allocated to the first charging area based on a preset power allocation ratio of the first charging area in the first time period,reduce an actually used power of each charger in the second charging area in the first time period based on a charging requirement, in the first time period, of the terminal that newly enters the first charging area, to increase the actually used power of the first charging area in the first time period; and
charge, based on the increased actually used power of the first charging area in the first time period, the terminal that newly enters the first charging area and the terminal that is being charged in the first charging area, and charge, based on the reduced actually used power of the charger in the second charging area in the first time period, the terminal that is being charged in the second charging area.

17. The charging apparatus according to claim 14, wherein the charging module is further configured to:
when the terminal that newly enters prepares to be charged in the second charging area in the first time period and the charging station does not have an allocable power in the first time period, reallocate the charging power of each terminal in the charging station based on an actually used power of the second charging area in the first time period and the preset power allocation ratio of the plurality of charging areas.

18. The charging apparatus according to claim 17, wherein the charging module is configured to:
when the terminal that newly enters the second charging area needs to be charged in the second charging area in the first time period and the charging station cannot meet, in the first time period, a charging requirement of the terminal that newly enters the second charging area,
if the actually used power of the second charging area in the first time period is greater than or equal to a power allocated to the second charging area based on a preset power allocation ratio of the second charging area in the first time period,reduce a charging power of each charger in the second charging area in the first time period based on a charging requirement, in the first time period, of the terminal that newly enters the second charging area, and charge, based on the reduced charging power of the charger in the first time period, the terminal that newly enters the second charging area and the terminal that is being charged in the second charging area.

19. The charging apparatus according to claim 17, wherein the charging module is configured to:
when the terminal that newly enters the second charging area needs to be charged in the second charging area in the first time period and the charging station cannot meet, in the first time period, a charging requirement of the terminal that newly enters the second charging area, if the actually used power of the second charging area in the first time period is less than a power allocated to the second charging area based on a preset power allocation ratio of the second charging area in the first time period,reduce an actually used power of each charger in the first charging area in the first time period based on a charging requirement, in the first time period, of the terminal that newly enters the second charging area, to increase the actually used power of the second charging area in the first time period; and
charge, based on the increased actually used power of the second charging area in the first time period, the terminal that newly enters the second charging area and the terminal that is being charged in the second charging area, and charge, based on the reduced actually used power of the charger in the first charging area in the first time period, the terminal that is being charged in the first charging area.

20. The charging apparatus according to any one of claims 13 to 19, wherein the charging module is further configured to:
in the first time period, when the charging station has an allocable power, charge the first terminal and the second terminal based on a charging mode of each charging area and a preset charging policy corresponding to the charging mode.

21. The charging apparatus according to claim 20, wherein the charging module is configured to:
in the first time period, when the charging station has an idle power, charge the first terminal and the second terminal based on the idle power of the charging station and a charging policy corresponding to a charging mode of a charging area in which the first terminal and the second terminal each are located, wherein the idle power indicates an unused power in the output power of the charging station other than a power that meets charging requirements of the first terminal and the second terminal, and the idle power is a part of the allocable power; and
in the first time period, when the terminal that newly enters the second charging area prepares to be charged in the second charging area in the first time period and the charging station does not have an idle power, in a condition that expected charging duration of the first terminal in the first charging area is less than expected parking duration of the first terminal in the first charging area, stop charging of the first terminal based on maximum allowed pause duration of the first terminal, start to charge the terminal that newly enters the second charging area, and then continue to charge the first terminal, wherein the maximum allowed pause duration of the first terminal is obtained based on the expected parking duration of the first terminal in the first charging area and the expected charging duration of the first terminal in the first charging area.

22. An electronic device, comprising:
one or more processors; and
a memory, configured to store one or more programs, wherein
when the one or more programs are executed by the one or more processors, the charging method according to any one of claims 1 to 11 is implemented.

23. A computer-readable storage medium, wherein the computer-readable storage medium stores a computer program, and when the computer program is executed, the charging method according to any one of claims 1 to 11 is implemented.

24. A computer program, wherein when the computer program is executed by a computer, the charging method according to any one of claims 1 to 11 is implemented.
